# EUROPEAN PATENT APPLICATION

(11) **EP 2 509 114 A2**
(43) Date of publication of application: **10.10.2012**
(21) Application number: 12162882.0
(22) Date of filing: 02.04.2012
(51) Int. Cl.: H01L 31/042, F24J 2/52

(54) **Photovoltaic mounting system with grounding bars and method of installing same**

(30) Priority: 05.04.2011 US 201113079900
(71) Applicant: General Electric Company, Schenectady, NY 12345 (US)
(72) Inventor: Korman, Charles Steven, Niskayuna, NY 12309 (US); Johnson, Neil Anthony, Niskayuna, NY 12309 (US); Wagner, Christian Joseph, Niskayuna, NY 12309 (US)
(74) Representative: Picker, Madeline Margaret

(57) **Abstract**

A photovoltaic (PV) mounting system includes at least one PV module (12), a pair of metallic rail sections (14), and a grounding bar (16) connected to each end of the metallic rail sections (14) for grounding the metallic rail sections (14). The system also includes a wiring harness (18) for electrically connecting several PV modules (12), a locking cover (20) for covering and protecting the wiring harness (18), a standard connector box (22) electrically connected to one end of the wiring harness (18), and a home run cable (24) electrically connected to the connector box (22). A method for grounding the PV mounting system (10) is also disclosed.

## Description

### BACKGROUND

The invention relates generally to photovoltaic (PV) systems and more particularly to a system and method for grounding PV mounting system and rail sections.

Nearly all electrical systems in the U.S. are grounded to mitigate the impacts of lightning, line surges, or unintentional contact with high voltage lines. Most PV systems include modules with metal frames and metal mounting racks that are in exposed locations, e.g. rooftops where they are subject to lightning strikes, or are located near high voltage transmission lines that in the event of high winds, etc., can come into contact with PV arrays.

The modules in a typical PV array have aluminum frames that are often anodized. The 2008-NEC code that has the same requirements as the draft 2010-NEC code and governs installation of PV systems requires exposed metal surfaces be grounded. There are special dc wiring and grounding requirements that must be met specifically for dc module strings that can produce voltages at high as 600 volts. A failure in the insulating material of the PV laminate could allow the frame to be energized up to 600V dc.

The installer of a PV system is required to ground each module frame per the NEC code and UL standard 1703. This inter-module grounding must be met using a heavy, e.g. at least #10 gauge) copper wire and a 10-32 screw that can cut into the frame. Additional assurances are required even for frames having anodized surfaces. Washer/connectors in such cases are used to cut into the metal frame and provide the best electrical contact. Because the modules in a typical PV array have aluminum frames that are often anodized, providing continuity of frame grounding does not ensure rail grounding and at least #10 gauge copper ground leads are required to be attached to each separate rail section and brought to a common point.

Traditional installation of a PV mounting system requires layout of the rail system prior to physical attachment, usually necessitating measurement and snapping of chalk lines for alignment. This is usually sufficient for most applications. However, some applications require a well-controlled spacing between rails in order to ensure proper alignment of modules so a more consistent method for assuring alignment of parallel rails is desired.

### BRIEF DESCRIPTION

The inventors of the present application have addressed the problem of assuring proper alignment of PV modules, while providing adequate grounding of the metal rail segments of the PV mounting system and a connector box that is attached to an end of an individual rail segment.

Briefly, in accordance with one embodiment, a system for grounding photovoltaic (PV) modules comprising at least one building block including at least one PV module, a pair of metallic rail sections, and a metallic grounding bar connected to each end of the metallic rail sections for grounding the metallic rail sections.

In another aspect, a method for grounding a photovoltaic system comprises inserting a PV module into a first metallic rail section and into a second, opposite metallic rail section to hold the PV module in place; and connecting a grounding bar to each end of the first and second metallic rail sections for grounding the metallic rail sections.

### DRAWINGS

These and other features, aspects, and advantages of the present invention will become better understood when the following detailed description is read with reference to the accompanying drawings in which like characters represent like parts throughout the drawings, wherein:
FIG. 1 is a front perspective view of a basic building block of a PV mounting system with metallic rails and grounding bars for grounding the metallic rails according to an embodiment of the invention;
FIG. 2 a rear schematic view showing a dc-to-ac microinverter integral to the PV laminate and a plug and play ac-voltage power connector suitable for use with the system shown in FIG. 1 to carry an equipment ground connection from ac-voltage module to ac-voltage module through the plurality of ac-voltage modules;
FIG. 3 is a front perspective view of a PV mounting system with a single row of a basic building block of PV modules that form a single circuit and held in place with metallic rails that are grounded using metallic grounding bars according to an embodiment of the invention;
FIG. 4 is a front perspective view of a PV mounting system that includes two rows of the basic building blocks of PV modules with mounting rails that are automatically grounded using metallic grounding bars according to an embodiment of the invention;
FIGS. 5(a) and 5(b) are schematic views of a standard connector box and a pass-through connector box, respectively, according to an embodiment of the invention.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and principles of this invention.

### DETAILED DESCRIPTION

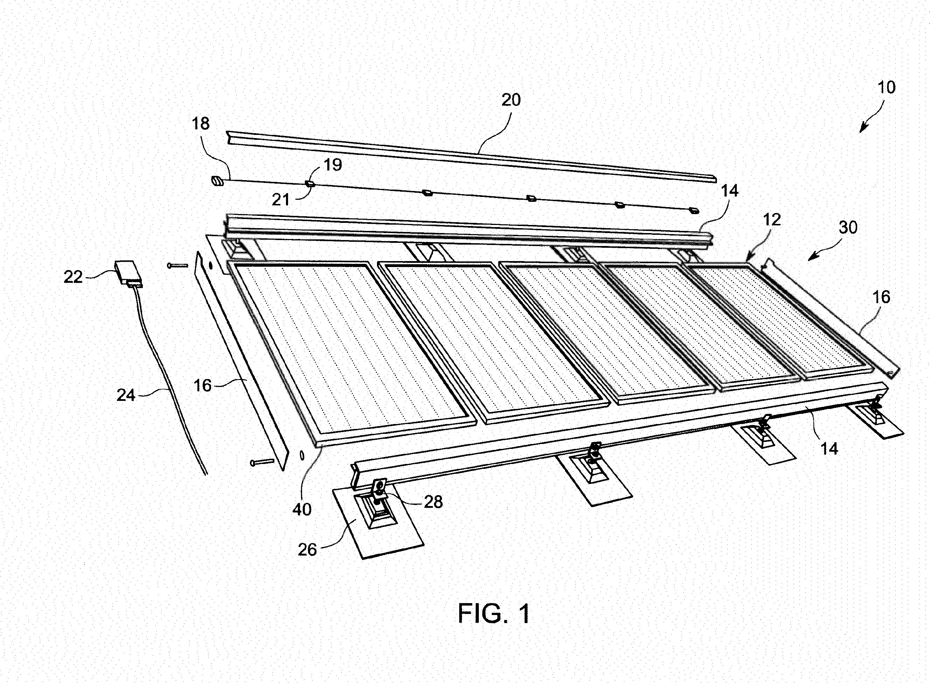

Referring now to FIGS. 1-5, a photovoltaic (PV) mounting system 10 includes a plurality of PV modules 12, a plurality of metallic rail sections 14, a plurality of metallic grounding bars 16, a wiring harness 18, a locking cover 20 for covering and protecting the wiring harness 18, a connector box 22, at least one home run cable 24, and a plurality of mounting stanchions 26 with L-brackets 28 for mounting the rails sections 14 to the stanchions 26. In the illustrated embodiment, the PV mounting system 10 includes a basic building block 30 with five (5) PV modules 12. However, it will be appreciated that the invention is not limited by the number of PV modules 12 that are configured for the basic building block 30, and that the basic building block 30 may include any desirable number of PV modules 12, depending on design requirements and National Electrical Code (NEC) limitations. In one example, each PV module 12 is an ac module consisting of a low voltage dc module and an integral dc-ac inverter so that each PV module 12 can produce 240Vac power. In another example, each PV module 12 can produce 120Vac power. The highest dc voltage is the dc voltage of a single PV module 12, which is approximately 30V, which is less than the UL safety limit of 48Vdc. The number of PV modules in a single circuit is determined by both the NEC and by the size of the protection circuit breaker in the load panel.

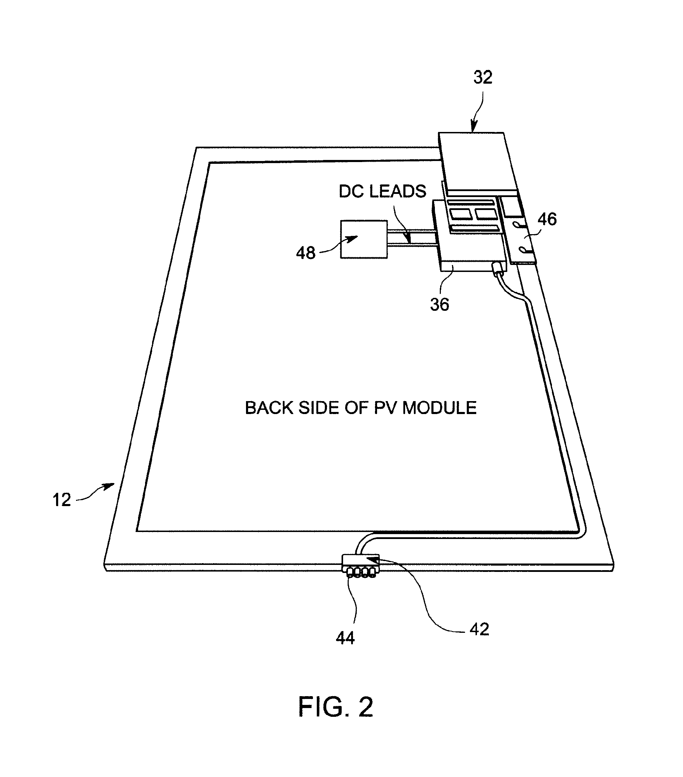

As shown in FIG. 2, the backside of each PV module 12 includes a micro-inverter 32 housed within a metal case 36. Each micro-inverter 32 is integrated with a corresponding PV module 12. Each PV module 12 includes a metallic frame 40 with a plug and play module connector 42 located on the top of the PV module 12 when the PV module 12 is inserted into the rail sections 14 (FIG. 1). The plug and play module connector 42 may include, for example, four pins 44: a pair of 120V ac-voltage pins, a neutral conductor pin and a dc ground conductor pin. Conversely, the wiring harness 18 may include, for example, a corresponding connector 19 (FIG. 1) with four slots 21 for receiving the four pins 44: a pair of 120V ac-voltage slots, a neutral conductor slot and a dc ground conductor slot. Each plug and play module connector 42 is electrically connected internal to its corresponding micro-inverter 32 to a respective micro-inverter chassis/ground, which may be, for example, the micro-inverter metal case 36. The metal case 36 of each micro-inverter 32 is mechanically and electrically attached to the metallic frame 40 of a corresponding PV module 12 by a metallic frame attachment bracket 46, for example, to form a low resistance grounding contact between the metal case 36 and the corresponding metallic frame 40. It will be appreciated that the invention is not limited by the plug and play module connector 42 having pins 44 that cooperate with respective slots of the wiring harness 18, and that the invention can be practiced with the plug and play module connector 42 having slots that receive respective pins of the wiring harness 18. In other words, the pins and slots can be located on either connector 19, 42. The location of the connector 42 is also not a limitation because the connector 42 could be located at the back of the PV module 12 in a manner that does not compromise the physical insertion of the PV module 12 into the "insert and capture" rail sections 14.

Presently, all commercial systems that employ micro-inverters 32 still require an equipment ground, meaning that all modules with metallic frames 40 and metal mounting systems have to be connected to a common earth ground through a low resistance path. Such inter-module ground connections are still made using processes that require the use of metallic splices, lugs, penetrating washers, and wires. All of these methods require hands-on grounding connections be made at the time of installation and usually requires the presence of an experience electrician.

Each micro-inverter 32 may be connected to the PV module 12 through a corresponding junction box 48. Each junction box 48 houses the normal +/- dc wiring/connectors of a PV module 12 and the corresponding micro-inverter 32. Because each micro-inverter case 36 is also electrically coupled to the metallic frame 40 of its corresponding PV module 12, the ground pin in each of the connectors 19, 42 automatically grounds all of the module frames 40 that are interconnected through the connectors 19, 42.

The connectors 19, 42 carry a ground connection from PV module 12 to PV module 12 of the basic building block 30 of the PV mounting system 10. Because each micro-inverter case 36 is electrically coupled to the metallic frame 40 of its corresponding PV module 12, the ground pins in the power connectors 19, 42 automatically ground all of the module frames 40 when all of the PV modules 12 are installed into the metallic rail sections 14. Further, the metallic grounding bars 16 connected to each end of the metallic rail sections 14 serve to provide a continuous grounding path between the metallic rail sections 14. Further, pre-drilled holes in the ends of the rail sections 14 for mounting the metallic grounding bars 16 ensure the correct spacing between the pair of rail sections 14 of the basic building block 30, as shown in FIG. 1.

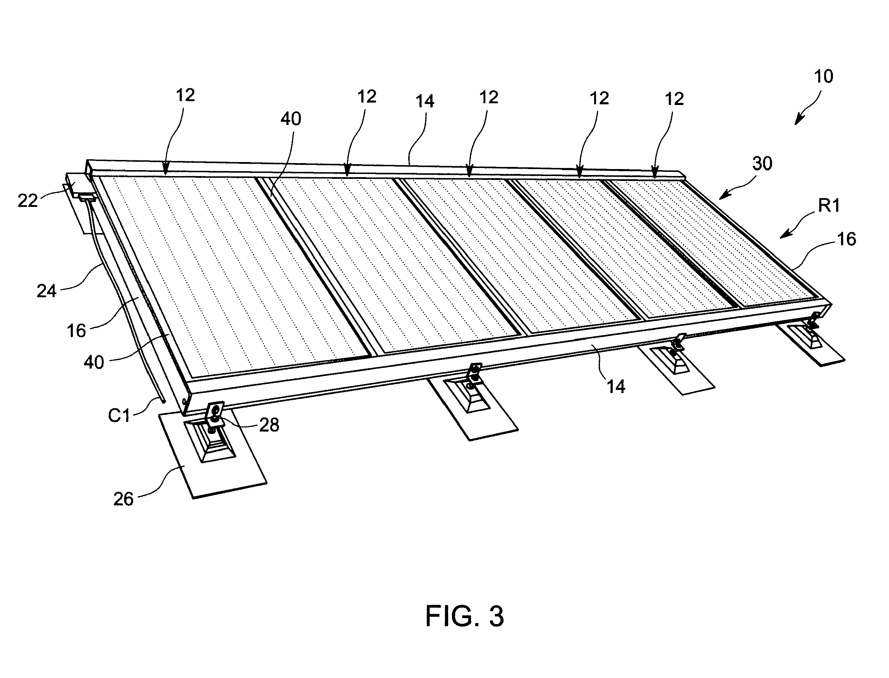

The number of basic building blocks 30 that form a single circuit of the PV mounting system 10 depends on the amount of electrical power generated by each PV module 12. To this end, the invention can be practiced with any desirable number of basic building blocks 30 and PV modules 12, depending on the amount of electrical power generated by each PV module 12, the limitation of the electrical load panel according to NEC limitations, and the rating of the protection circuit breaker in the load panel. It is noted that each micro-inverter 34 produces ∼1A of current and the circuit breaker rating is 15-20A, which constitutes a single circuit. More power can be accommodated by the load panel, but will require an additional breaker, circuit and home run cable 24. In one example, a basic building block 30 comprising a single row, R1, of five (5) PV modules 12 forms a single circuit, C1, as shown in FIGS. 1 and 3. In this example, the PV mounting system 10 includes a pair of metallic rail sections 14, a pair of metallic grounding bars 16, a wiring harness 18, a locking cover 20 for covering and protecting the wiring harness 18, a connector box 22, a home run cable 24, and a plurality of mounting stanchions 26 with L-brackets 28 for mounting the rails sections 14 to the stanchions 26.

One end of the wire harness 18 is connected to a connector box 22. The home run cable 24 from the connector box 22 produces a single circuit, C1, with about 5A of electrical current (for five (5) PV modules), which can be fed to a conventional 15A circuit breaker panel (not shown). Because each PV module 12 generates about 1A of electrical current, a total of about 10-13 PV modules 12 on a single circuit, C1, can be fed to a conventional 15A circuit breaker panel, depending on the amount of electrical current that is generated by each PV module 12. It will be appreciated that the connector 56 can be fed to another row of PV modules, and so on, until the last row of PV modules are fed to the circuit breaker panel. A system having more than about 10-13 PV modules 12 will need an additional home run cable 24 and circuit breaker. It is noted that the ground pin from the connectors 19, 42 (not visible in FIG. 3) is grounded to the metal wall of the connector box 22, and the connector box 22 is electrically connected to the metallic rail section 14 by using a metallic connector, such as a screw, washer, and the like. Thus, the ground bar 16 automatically grounds the connectors 19, 42, in addition to the metallic rail sections 14.

Because the PV mounting system 10 requires the capture of the top and bottom of each PV module 12 in the rail sections 14, the spacing between the metallic rail sections 14 is important. One aspect of the invention is that the rails sections 14 include a plurality of pre-drilled holes for mounting the metallic grounding bars 16 at the proper location and ensuring the correct spacing between the pair of rail sections 14, thereby reducing installation errors. Therefore, the metallic grounding bars 16 serve a dual purpose: 1) to ensure correct physical spacing between the metallic rail sections 14; and 2) to automatically ground the metallic rail sections 14 and connectors 19, 42.

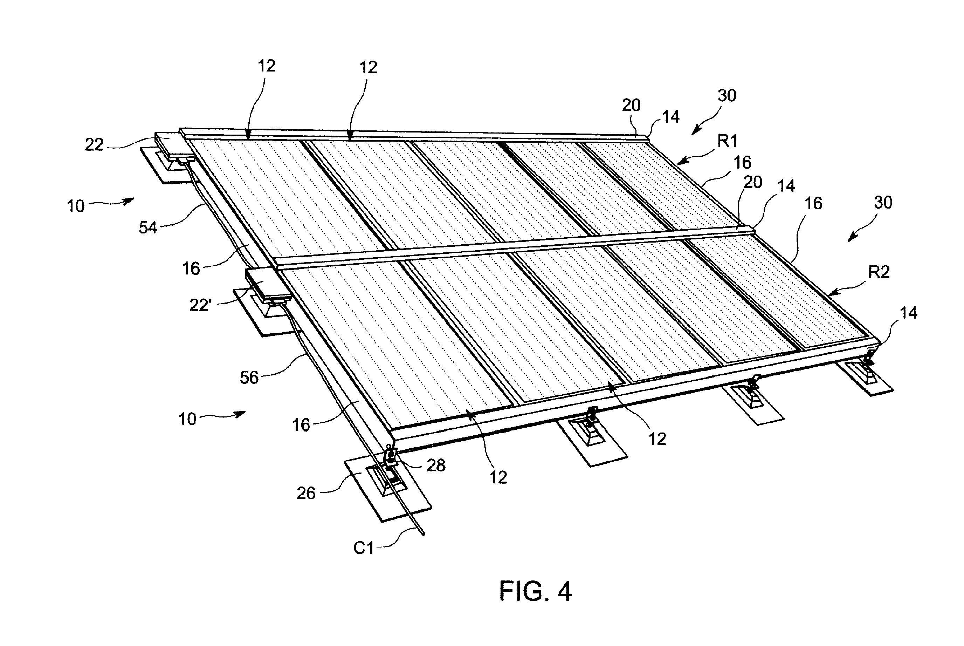

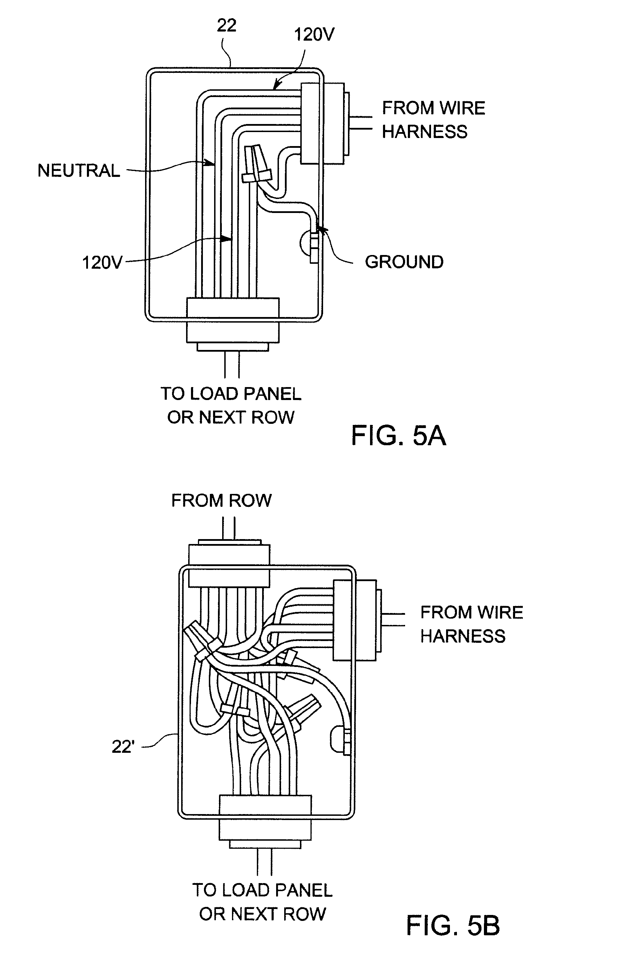

As shown in FIGS. 4 and 5, two basic building blocks 30 with five (5) PV modules 12 in each basic building block 30 forming two rows R1, R2 are joined together with a common center metallic rail section 14. A metallic rail section 14 is also at each end of the PV mounting system 10. A total of four side ground bars 16 at each end of the rows R1, R2 of basic building blocks 30 ground all three metallic rail sections 14.

One end of the wire harness 18 is connected to a standard connector box 22. A connector 54 from the standard connector box 22 is, in turn, connected to a pass-through connector box 22'. In the illustrated example, a connector 56 from the pass-through connector box 22' produces a single circuit, C1, with about 10 amps of electrical power, which can be fed to a conventional 15 amp circuit breaker panel (not shown). It will be appreciated that the connector 54 can be directly fed to the circuit breaker panel if there is only one row of up to about 10-13 PV modules 12, similar to the example of FIG. 3. It will also be appreciated that the connector 56 can be fed to another row of PV modules, and so on, until the last row of PV modules are fed to the circuit breaker panel. A system having more than about 10-13 PV modules 12 will need an additional home run cable 24 and circuit breaker. It is noted that the ground pin from the connectors 19, 42 is grounded to the metal housing of the connector boxex 22, 22', and the connector boxes 22, 22', in turn, are electrically connected to the metallic rail section 14 by using a metallic connector, such as a screw, washer, and the like. Thus, the ground bar 16 grounds the connectors 19, 42, in addition to the metallic rail sections 14.

While only certain features of the invention have been illustrated and described herein, many modifications and changes will occur to those skilled in the art. It is, therefore, to be understood that the appended claims are intended to cover all such modifications and changes as fall within the scope of the invention as defined in the appended claims.

## Claims

1. A system for grounding photovoltaic (PV) modules comprising at least one building block (30) including at least one PV module (12), a pair of metallic rail sections (14), and a metallic grounding bar (16) connected to each end of the metallic rail sections (14) for grounding the metallic rail sections (14).

2. The system according to claim 1, further comprsing at least one dc-ac micro-inverter (32).

3. The system according to claim 2, wherein the at least one micro-inverter (32) is internally connected to a respective chassis ground or metal case (36) and integrated with the at least one PV module (12).

4. The system according to claim 1, 2 or 3, wherein the at least one PV module (12) includes a connector (42), and wherein the system further includes a wiring harness with a connector (19) that mates with the connector (42) of the at least one PV module (12).

5. The system according to claim 4, wherein each connector (19, 42) includes a ground pin that is electrically connected to a metal case (36) of a micro-inverter (32).

6. The system according to claim 5, wherein the metal case (36) is mechanically and electrically attached to the metallic frame (40) of the at least one PV module 12 by a metallic frame attachment bracket (46).

7. The system according to any one of claims 1 to 6, further comprising a wiring harness (18) for electrically connecting the at least one PV module (12) to a standard connector box (22), a locking cover (20) for covering and protecting the ac wiring harness (18), and a home run cable (24) electrically connected to the standard connector box (22) to provide a single circuit, C1.

8. The system according to any one of claims 1 to 7, further comprising a plurality of PV modules in a first row, R1, and a plurality of PV modules in a second row, R2, wherein the plurality of PV modules in the first row, R1, are connected standard connector box (22), and wherein a connector (54) from the connector box (22) and the plurality of PV modules (12) in the second row, R2, are connected to a pass-through connector box (22'), and a connector (56) electrically connected to the pass-through connector box (22') to provide a single circuit, C1, from the pass-through connector box (22').

9. A method for grounding a photovoltaic system (10), comprising:
inserting a PV module (12) into a first metallic rail section (14) and into a second, opposite metallic rail section (14) to hold the PV module (12) in place; and
connecting a grounding bar (16) to each end of the first and second metallic rail sections (14) for grounding the metallic rail sections (14).

10. The method of claim 9, further comprising electrically connecting the PV module (12) to a wiring harness (18), electrically connecting the wiring harness (18) to a standard connector box (22), and electrically connecting a connector (24) to the standard connector box (22) to provide a single circuit, C1.
